# EUROPEAN PATENT APPLICATION

(11) **EP 2 184 260 A1**
(43) Date of publication of application: **12.05.2010**
(21) Application number: 09174279.1
(22) Date of filing: 28.10.2009
(51) Int. Cl.: C01B 3/36

(54) **Process to prepare a mixture of hydrogen and carbon monoxide**

(30) Priority: 28.10.2008 EP 08167718
(71) Applicant: Shell Internationale Research Maatschappij B.V., 2596 HR The Hague (NL)
(72) Inventor: Fernie, Martin John, 1031 HW AMSTERDAM (NL)
(74) Representative: Matthezing, Robert Maarten

(57) **Abstract**

The invention is directed to a process to prepare a mixture of hydrogen and carbon monoxide from a methane comprising gas. The following steps are performed:
(a) Partial oxidation of the methane comprising gas with an oxygen containing gas at a pressure of above 5 MPa thereby obtaining a raw syngas comprising carbon monoxide and hydrogen having a temperature of above 1100 °C,
(b) expanding the raw syngas in an high temperature/high pressure turbo- expander thereby recovering power and obtaining an expanded syngas having a pressure below 4 MPa and a temperature below 1050 °C,
(c) further cooling the expanded syngas to obtain the mixture of hydrogen and carbon monoxide having a temperature of between 100 and 500 °C.

## Description

The invention is directed to a process to prepare a mixture of hydrogen and carbon monoxide in an energy efficient manner from a methane comprising gas.

Such a process is described in WO-A-200697440. This publication describes a process to prepare a mixture of hydrogen and carbon monoxide by pre-reforming a natural gas feed, increasing the temperature to 800 °C of the pre-reformed feed and subjecting the heated pre-reformed feed to a partial oxidation (POX) to obtain a mixture of carbon monoxide and hydrogen. This publication also describes an alternative process wherein instead of a partial oxidation the heated pre-reformed feed is subjected to an auto-thermal reforming (ATR) step.

Although the above process is energy efficient as compared to its prior art processes there is still a desire to further improve said efficiency. The object of the present invention is therefore to provide a process to prepare a mixture of hydrogen and carbon monoxide in an energy efficient manner from a methane comprising gas.

The following process achieves said object. Process to prepare a mixture of hydrogen and carbon monoxide from a methane comprising gas by performing the following steps,
(a) partial oxidation of the methane comprising gas with an oxygen containing gas at a pressure of above 5 MPa thereby obtaining a raw syngas comprising carbon monoxide and hydrogen having a temperature of above 1100 °C,
(b) expanding the raw syngas in an high temperature/high pressure turbo- expander thereby recovering power and obtaining an expanded syngas having a pressure below 4 MPa and a temperature below 1050 °C,
(c) further cooling the expanded syngas to obtain the mixture of hydrogen and carbon monoxide having a temperature of between 100 and 500 °C.

Applicants found that in the process according the invention involving step (b) a more energy efficient process is obtained. An additional advantage is that step (a) can be performed at a relatively high pressure, which is advantageous for sizing of the POX equipment and feed pretreatment equipment, in a process wherein the pressure of the mixture of hydrogen and carbon monoxide is relatively low. A further advantage is that the cooling in step (c) can be performed in more simple designs of heat exchangers than when such cooling would have been performed directly on the raw syngas due to the lower inlet temperature to the exchanger. Further advantages will be described when dealing with some of the preferred embodiments as described below.

The methane comprising gas may also comprise ethane and optionally hydrocarbons having more than 2 carbon atoms. Examples of such gaseous mixtures are natural gas, refinery gas, associated gas or coal bed methane and the like. The gaseous mixture suitably comprises mainly, i.e. more than 90 volume percent, especially more than 94 volume percent, C₁₋₄ hydrocarbons, especially comprises at least 60 volume percent methane, preferably at least 75 volume percent, more preferably at least 90 volume percent. Preferably natural gas or associated gas is used.

The temperature of the methane comprising gas in step (a) is preferably above 600 °C, more preferably above 650 °C, even more preferably above 700 °C and most preferably between 750 and 900 °C. The methane comprising feed may be heated to said temperatures by various methods. Heating may be effected by indirect heat exchange with hot gases for example by means of a radiant furnace. Preferably heating is effected by indirect heat exchange between the expanded syngas obtained in step (b) and the methane comprising gas. This indirect heat exchange may be effected in for example a shell & tube heat exchanger. The temperature of the expanded syngas is sufficiently low to directly use this gas in a heat exchanger. For example, the temperature of the raw syngas of step (a) may be too high for direct use in said heat exchanger, due to for example mechanical strength limitations at high temperatures and pressures of the materials of construction suitable for such equipment. The high temperature may also result in excessive heat exchange surface temperatures, causing thermal cracking of the methane containing feed resulting in fouling of the exchanger. If the methane comprising gas comprises next to methane an amount of ethane and higher C-number hydrocarbons it is preferred to pre-treat this gas before using it in step (a) in a so-called pre-reforming process. This is advantageous to avoid cracking of the ethane and higher carbon number hydrocarbons at the elevated temperatures of the methane comprising gas in step (a).

Pre-reforming is a well-known technique and has been applied for many years in for example the manufacture of so-called city gas. Suitably the pre-reforming step is performed as a low temperature adiabatic steam reforming process. The gaseous feed to the pre-reforming is preferably mixed with a small amount of steam and preheated to a temperature suitably in the range 350-700 °C, preferably between 350 and 450 °C and passed over steam reforming catalyst having preferably a steam reforming activity at temperatures of below 650 °C, more preferably below 550 °C. The steam to carbon (as hydrocarbon and CO) molar ratio is preferably below 1 and more preferably between 0.1 and 1.

Suitable catalysts for steam pre-reforming are catalysts comprising an oxidic support material, suitably alumina, and a metals of the group consisting of Pt, Ni, Ru, Ir, Pd and Co. Examples of suitable catalysts are nickel on alumina catalyst as for example the commercially available pre-reforming catalysts from Johnson Matthey, Haldor Topsoe, BASF and Sud Chemie or the ruthenium on alumina catalyst as the commercially available catalyst from Osaka Gas Engineering.

Pre-reforming is preferably performed adiabatically. Thus the gaseous feedstock and steam are heated to the desired inlet temperature and passed through a bed of the catalyst. Higher hydrocarbons having 2 or more carbon atoms will react with steam to give carbon oxides and hydrogen. At the same time methanation of the carbon oxides with the hydrogen takes place to form methane. The net result is that the higher hydrocarbons are converted to methane with the formation of some hydrogen and carbon oxides. Some endothermic reforming of methane may also take place, but since the equilibrium at such low temperatures lies well in favour of the formation of methane, the amount of such methane reforming is small so that the product from this stage is a methane-rich gas. The heat required for the reforming of higher hydrocarbons is provided by heat from the exothermic methanation of carbon oxides (formed by the steam reforming of methane and higher hydrocarbons) and/or from the sensible heat of the feedstock and steam fed to the catalyst bed. The exit temperature will therefore be determined by the temperature and composition of the feedstock/steam mixture and may be above or below the inlet temperature. The conditions should be selected such that the exit temperature is lower than the limit set by the de-activation of the catalyst. While some reformer catalysts commonly used are deactivated at temperatures above about 550°C, other catalysts that may be employed can tolerate temperatures up to about 700°C. Preferably the outlet temperature is between 350 and 530°C.

The partial oxidation of step (a) may be performed according to well-known principles as for example described for the Shell Gasification Process in the Oil and Gas Journal, September 6, 1971, pp 85-90. Publications describing examples of partial oxidation processes are EP-A-291111, WO-A-9722547, WO-A-9639354 and WO-A-9603345. In step (a) according to the process of the present invention partial oxidation of the methane comprising gas having a temperature of above 600 °C with an oxygen containing gas and at a pressure of above 5 MPa takes place. The pressure is preferably above 6.5 MPa and preferably below 9 MPa. The raw syngas comprising carbon monoxide and hydrogen has a temperature of above 1100 °C and preferably between 1200 and 1350 °C. The partial oxidation of step (a) is performed in the absence of a catalyst as is the case in the above referred to Shell Gasification Process. This also means that the raw syngas is not contacted with a reforming catalyst before it is expanded in step (b).

The oxygen containing gas may be air (containing about 21 percent of oxygen) and preferably oxygen enriched air, suitably containing up to 100 percent of oxygen, preferably containing at least 60 volume percent oxygen, more preferably at least 80 volume percent, more preferably at least 98 volume percent of oxygen. Oxygen enriched air may be produced via cryogenic techniques, or alternatively by a membrane based process, e.g. the process as described in WO 93/06041.

Contacting the feed with the oxygen containing gas in step (a) is preferably performed in a burner placed at the top of a vertically oriented refractory lined reactor vessel. Such a reactor is different from a premix combustor generating syngas because the feed streams for a premix combustor cannot be preheated to temperatures of above 600 °C without the risk of ignition upstream of the combustor. The temperature of the oxygen as supplied to the burner is preferably greater than 200 °C. The upper limit of this temperature is preferably 500 °C. The raw syngas as obtained in step (a) preferably has H₂/CO molar ratio of from 1.5 up to 2.6, preferably from 1.6 up to 2.2.

In step (b) the raw syngas as obtained in step (a) is expanded in a high temperature/high pressure turbo-expander thereby recovering power. In the turbo-expander the pressure is reduced to below 4 MPa and preferably to below 3.5 MPa. The lower limit for the pressure after expansion will depend on the end use of the mixture of carbon monoxide and hydrogen. A temperature reduction results from letting down the pressure in step (b). The magnitude of the resulting temperature reduction will depend on the pressure reduction imposed. Preferably the temperature is below 1000 °C and more preferably between 800 and 900 °C if the expanded gas is used to heat the pre-reformed methane comprising gas as described above.

The expander is preferably a high temperature/high pressure turbo-expander is similar to the expander used in gas turbine assemblies. The blades of the turbo-expander are preferably cooled with syngas, more preferably by recycling part of the syngas produced by the present process. The recycled syngas preferably has a temperature of between 200 and 700 °C when used to cool the blades of the turbo-expander.

Further cooling of the expanded syngas in step (c) is preferably performed in a series of heat exchangers. The expanded gas is suitably first cooled in step (c) in a so-called shell and tube type waste heat boiler. An advantage of the present process is that because the gas inlet temperature is lower than in the prior art process WO-A-2006/097440 a simpler boiler can be applied. In such a boiler cooling is effected by means of indirect heat exchange between the expanded syngas as present at the tube side and water as present at the shell side. Cooling is effected of the expanded gas and saturated steam is generated at the shell side. Said steam may also be super heated against the cooled syngas in a subsequent exchanger. One or more of such boilers may be used in series. Part of said steam may advantageously be used in the optional pre-reforming step described above and/or to pre-heat the oxygen containing gas used in step (a).

If a pre-reforming step is part of the process, the cooling in step (c) is preferably performed by indirect heat exchange between the expanded gas and the pre-reformed methane comprising gas as described above in a so-called first feed-effluent heat exchanger.

The temperature of the expanded gas as obtained after the first feed-effluent heat exchanger and/or the waste heat boiler downstream the turbo-expander will preferably be between 400 and 500 °C. This gas is further cooled in step (c) in a second feed-effluent heat exchanger against cold methane comprising gas upstream an optional sulphur removal step. The methane comprising gas will preferably be increased in temperature in said second feed-effluent heat exchanger to a temperature of between 300 and 450 °C before being subjected to said sulphur removal step. The mixture of carbon monoxide and hydrogen is then cooled to a temperature below the dewpoint of the syngas in a 3^{rd} heat exchanger which preheats boiler feed water to achieve maximal heat recovery after which the gas can be fed to a water scrubber in which advantageously soot is removed.

The mixture of carbon monoxide and hydrogen as obtained by the above process may advantageously be used as feedstock for processes which operate at a pressure of below 4 MPa and preferably below 3.5 MPa. The mixture of carbon monoxide and hydrogen may also be recompressed to be used in processes like for example Fischer-Tropsch synthesis process, methanol synthesis process, a dimethyl ether synthesis process, an acetic acid synthesis process, ammonia synthesis process or to other processes which use a synthesis gas mixture as feed such as for example processes involving carbonylation and hydroformylation reactions. Applicants found that even when recompressing is performed an improvement in efficiency is achieved.

An even more efficient process would not involve such a recompression step. Such a downstream process is suitably a a Fischer-Tropsch synthesis step (d) as performed in a slurry bubble type reactor wherein the mixture of carbon monoxide and hydrogen is converted in one or more steps at least partly into liquid hydrocarbons in the presence of a Fischer Tropsch type catalyst which preferably comprises at least one metal (compound) selected from group 8 of the Periodic Table. Preferred catalytic metals are iron and cobalt, especially cobalt. It is preferred to produce a very heavy product in step (d). This results in a relatively low amount of light hydrocarbons, e.g. C₁-C₄ hydrocarbons by-product, resulting in a higher carbon efficiency. Large amounts of heavy products may be produced by catalysts which are known in the literature under suitable conditions, i.e. relatively low temperatures and relatively low H₂/CO ratios. Any hydrocarbons produced in step (d) boiling above the middle distillate boiling range may be converted into middle distillates by means of hydrocracking. Such a step will also result in the hydrogenation of the product as well as in (partial) isomerization of the product.

The Fischer Tropsch synthesis is, as indicated above, preferably carried out with a catalyst producing large amounts of unbranched paraffinic hydrocarbons boiling above the middle distillate range. Relatively small amounts of oxygen containing compounds are produced. The process is suitably carried out at a temperature of 150 to 300 °C, preferably 190 to 260 °C, and a pressure from 2 to 4 MPa bar, preferably below 3.5 MPa. In the hydrocracking process preferably at least the fraction boiling above the middle distillate boiling range is hydrocracked into middle distillate. Preferably all C₅⁺, especially all C₁₀⁺ hydrocarbons are hydrocracked in view of the improved pour point of the middle distillates obtained in such a process.

The invention will be illustrated by making use of the following calculated examples.

### Comparative Example 1

A natural gas feed is subjected to a pre-reforming step and the pre-reformed gas is increased in temperature to 800 °C in a radiant furnace. The heated pre-reformed gas is partially oxidized with an stream of 99 volume percent pure oxygen having a temperature of 250 °C to obtain a raw syngas having a temperature of 1280 °C and a pressure of 6.6 MPa. The raw syngas is reduced to a temperature of <500 °C in a waste heat boiler generating 1260 t/h of super heated steam. The syngas of <500 °C is reduced in temperature to 160 °C by heat exchange against the natural gas feed and against fresh boiler feed water as used in the waste heat boiler. The supplementary shaft power required to operate this process is 31MW.

### Example 2

Example 1 is repeated except that the raw syngas is expanded to 3 MPa in a turbo expander. The resulting temperature of the expanded syngas is 997 °C. This syngas is cooled in a waste heat boiler to 440 °C resulting in ∼20% reduction in superheated steam generation. The syngas of 440 °C is reduced in temperature to 130 °C by heat exchange against the natural gas feed and against fresh boiler feed water as used in the waste heat boiler. The net excess shaft power generated by this process via the turbo-expander is 18 MW, which equates to a 49 MW improvement over Example 1.

Example 2 illustrates that when the process according the invention is performed a process is obtained which has a net power production as opposed to Example 1 illustrating a process according to the prior art, WO-A-200697440, which requires power.

Applicants further found that when the product mixture of carbon monoxide and hydrogen as obtained in Example 2 is recompressed to the starting pressure of 6.6 MPa the supplementary shaft power requirement would be26 MW, which is still an improvement over Example 1.

Applicants further found that if Example 2 is repeated wherein the natural gas feed is not pre-reformed and has a temperature of 400 °C (oxygen having ambient temperature) the supplementary power requirements would be 14 MW shaft power and the oxygen consumption would be 20% higher than in Example 2. This demonstrates the benefit gained from additional preheating of the prereformed natural gas feed to a temperature of above 400 °C.

## Claims

1. Process to prepare a mixture of hydrogen and carbon monoxide from a methane comprising gas by performing the following steps,
(a) Partial oxidation of the methane comprising gas with an oxygen containing gas at a pressure of above 5 MPa thereby obtaining a raw syngas comprising carbon monoxide and hydrogen having a temperature of above 1100 °C,
(b) expanding the raw syngas in an high temperature/high pressure turbo- expander thereby recovering power and obtaining an expanded syngas having a pressure below 4 MPa and a temperature below 1050 °C,
(c) further cooling the expanded syngas to obtain the mixture of hydrogen and carbon monoxide having a temperature of between 100 and 500 °C.

2. Process according to claim 1, wherein the methane comprising gas as used in step (a) is obtained by subjecting a mixture of a methane comprising gas and steam having a temperature of between 350 and 450°C to a pre-reforming step to obtain a pre-reformed gas and increasing the temperature of the pre-reformed gas to a temperature of above 600 °C.

3. Process according to claim 2, wherein step (c) is performed by indirect heat exchange between the pre-reformed gas and the expanded syngas

4. Process according to claim 2, wherein increasing the temperature of the pre-reformed gas is carried out by using a radiant preheat furnace.

5. Process according to claim 2 where the oxygen containing gas is preheated by indirect contact with steam to a temperature of between 200 and 500 °C.

6. Process according to any one of claims 1-5, wherein the cooling of the expanded syngas in step (c) is preformed in a shell & tube type waste heat boiler wherein by means of indirect heat exchange between the expanded syngas as present at the tube side and water as present at the shell side cooling is effected of the expanded gas and steam is generated at the shell side.

7. Process according to any one of claims 1-6, wherein step (a) is performed in a partial oxidation reactor comprising a refractory lined reactor vessel and one or more burners.

8. Process according to prepare a hydrocarbon by performing a process according to any one of claims 1-7 and using the mixture as obtained in step (c) as feed to a Fischer-Tropsch synthesis step as performed at a pressure of below 4 MPa yielding a Fischer-Tropsch product, wherein the hydrocarbon product is separated from the Fischer-Tropsch synthesis product and wherein the Fischer-Tropsch synthesis product may optionally have been subjected to one or more hydroprocessing steps before said separation.

9. Process according to claim 8, wherein the Fischer-Tropsch synthesis step is performed in a slurry bubble type reactor.
